# EUROPÄISCHE PATENTSCHRIFT

(11) **EP 2 668 393 B1**
(45) Veröffentlichungstag und Bekanntmachung des Hinweises auf die Patenterteilung: **02.09.2020**
(21) Anmeldenummer: 12702476.8
(22) Anmeldetag: 25.01.2012
(51) Int. Cl.: F02N 15/04, H02K 7/108

(54) **STARTVORRICHTUNG MIT ÜBERLASTSICHERUNG**
STARTING DEVICE HAVING AN OVERLOAD SAFETY MECHANISM
DISPOSITIF DE DÉMARRAGE AVEC PROTECTION DE SURCHARGE

(30) Priorität: 26.01.2011 DE 102011003175
(43) Veröffentlichungstag der Anmeldung: 04.12.2013
(73) Patentinhaber: SEG Automotive Germany GmbH, 70499 Stuttgart (DE)
(72) Erfinder: HALLAS, Patrick, 71640 Ludwigsburg (DE)
(74) Vertreter: Steinbauer, Florian
(86) Internationale Anmeldenummer: PCT/EP2012/051092
(87) Internationale Veröffentlichungsnummer: WO 2012/101147

(56) Entgegenhaltungen:
- EP-A1- 2 472 099
- DE-U1- 9 312 367
- FR-A1- 2 875 883
- FR-A1- 2 929 462

## Beschreibung

### Stand der Technik

DE 31 20 285 A1 bezieht sich auf ein Anlassergetriebe einer Brennkraftmaschine. Das Anlassergetriebe wird über einen Elektromotor angesteuert. Der Elektromotor umfasst einen Getriebeteil, mit dem die Rotationsbewegung des Elektromotors auf ein Andrehritzel übertragen wird, das auf einer Abtriebswelle angeordnet ist.

Bei heutigen Startvorrichtungen zum Andrehen von Verbrennungskraftmaschinen sind diese in der Regel mit einem Startermotor und einem Vorspuraktuator ausgerüstet. Der Vorspuraktuator wird in der Regel als Relais ausgebildet, welche den Einrückvorgang des Andrehritzels in die Verzahnung eines Zahnkranzes der anzudrehenden Verbrennungskraftmaschine übernimmt. Nach Einspuren des Andrehritzels in den Zahnkranz der Verbrennungskraftmaschine und bei ausreichender Flankenüberdeckung der miteinander kämmenden Verzahnungen übernimmt der Startermotor der Startvorrichtung das Andrehen der Verbrennungskraftmaschine.

Der Startermotor umfasst einen Rotor, der in der Regel als Anker ausgebildet ist und eine Anzahl von Ankerwicklungen umfasst. Die Ansteuerung der Ankerwicklungen erfolgt über einen Kommutator, der ebenfalls im Startermotor der Startvorrichtung untergebracht ist. Die Rotationsbewegung des als Anker ausgebildeten Rotors wird über ein Ankerritzel an ein Getriebe, insbesondere ein als Planetengetriebe ausgebildetes Umlaufgetriebe übertragen, welches die Rotation des Startermotors übersetzt, so dass das Andrehritzel im eingespurten Zustand mit einer höheren Drehzahl angetrieben wird, als derjenigen Drehzahl des Startermotors.

Die FR 2929462 A1 zeigt eine reibschlüssige Verbindung von Ankerritzel und Ankerwelle, deren Reibung durch die ausgeführte Passung von Ankerritzel und Ankerwelle abhängig ist. Die EP 2 472 099 A1 zeigt einen Anker für einen Elektromotor zum Antrieb einer Startvorrichtung, für eine Brennkraftmaschine, mit einem auf einer Ankerwelle drehbar aufgenommenen Ankerritzel. Das Ankerritzel ist in axialer Richtung auf der Ankerwelle lagefixiert.

In der Regel ist das Andrehritzel derart mit der Antriebswelle, d. h. der Ankerwelle des Rotors verbunden, so dass dieses überholt werden könnte.

### Darstellung der Erfindung

Die Erfindung betrifft eine Startvorrichtung gemäß Anspruch 1. Erfindungsgemäß wird vorgeschlagen, das Ankerritzel mittels einer reibschlüssigen Verbindung, die insbesondere als Rutschkupplung ausgebildet ist, auf der Antriebswelle des Rotors, d. h. der Ankerwelle zu lagern. In besonders vorteilhafter Weise ist das Ankerritzel, welches auf der Antriebswelle, d. h. der Ankerwelle des Rotors, aufgenommen ist, das Sonnenrad eines insbesondere als Planetengebilde ausgebildeten Umlaufgetriebes.

Das erfindungsgemäß vorgeschlagene Ankerritzel umfasst einen Hülsenteil und einen Bundteil. Das Ankerritzel ist mit einer Verzahnung, beispielsweise einer Geradverzahnung, am Hülsenteil versehen und mittels eines Befestigungselementes, so beispielsweise einer ein Feingewinde aufweisenden Mutter auf einem Bund eines Wellenzapfens der Antriebswelle an dem dem Kommutator abgewandten Ende aufgenommen. Durch das insbesondere als Mutter mit Feingewinde ausgebildete Befestigungselement ist der Hülsenteil des Ankerritzels, und damit das Ankerritzel selbst, in axialer Richtung auf dem Bund des Wellenzapfens gesichert.

An einer Lamellenverzahnung der Antriebswelle, d. h. der Ankerwelle, befindet sich mindestens ein Federelement, welches eine in axiale Richtung gerichtete Kraft erzeugt. Bei dem mindestens einem Federelement kann es sich beispielsweise um eine Tellerfeder, oder auch um ein Tellerfedernpaket in gleichsinniger oder gegensinniger Orientierung der einzelnen Tellerfedern oder um eine Wellenfeder handeln. Die Lamellenverzahnung der Antriebswelle kann eine Scheibe führen, die mindestens einen Reibbelag aufweist. Durch die Lagerung der Scheibe an der Lamellenverzahnung kann ein Verdrehen der Scheibe verhindert werden. Diese würde drehfest, jedoch axial beweglich, an der Lamellenverzahnung aufgenommen werden.

Die drehfest gelagerte Scheibe kann einen Reibbelag oder eine Reibbeschichtung umfassen, welche dem Bundteil des Ankerritzels gegenüberliegt. Aufgrund der Wirkung der durch das mindestens eine Federelement ausgeübten Axialkraft würde die Scheibe, die drehfest in der Lamellenverzahnung gelagert ist, an die dem Reibbelag, bzw. der Reibbeschichtung gegenüberliegende Seite des Bundteiles des Ankerritzels angestellt. Die durch das mindestens eine Federelement erzeugte Axialkraft würde axial über die Scheibe den Reibbelag und das durch das als Mutter ausgebildete Befestigungselement an das axial gesicherte Ankerritzel übertragen. Hierdurch wäre unter Berücksichtigung des Reibbelages der drehfest angeordneten Scheibe ein definiertes Drehmoment nötig, um das Ankerritzel auf der Ankerwelle zu verdrehen. Dieses definierte Drehmoment sorgt dafür, dass sich im Überlastfall, d. h. bei Auftreten eines unzulässig hohen Drehmomentes, das Ankerritzel auf der Ankerwelle, bzw. auf dem verdickten Bund eines Wellenzapfens verdrehen kann, und somit die Starterbauteile vor Überlastung geschützt sind.

Ein weiterer vorteilhafter Aspekt der erfindungsgemäß vorgeschlagenen Lösung ist darin zu erblicken, dass durch das einfache Auswechseln des Ankerritzels, d. h. des Sonnenrades eines Umlaufgetriebes, eine innere Starterübersetzung leicht geändert werden kann, da hierfür lediglich der Austausch des Ankerritzels und nicht der Austausch des gesamten Ankers erforderlich ist. Neben dem Austausch des Ankerritzels werden bei Änderungen des Übersetzungsverhältnisses auch die Planetenräder sowie der Planetenträger des Umlaufgetriebes ausgetauscht. Das Ankerritzel stellt das Sonnenrad des insbesondere als Planetengetriebe ausgebildeten Umlaufgetriebes dar.

### Kurze Beschreibung der Zeichnung

Anhand der Zeichnung wird die Erfindung nachstehend eingehender beschrieben.

Es zeigt:
- Figur 1: einen Längsschnitt durch eine Startvorrichtung,
- Figur 2: eine perspektivische Ansicht des Rotors des Startermotors der Startervorrichtung gemäß Figur 1,
- Figur 3: eine Ansicht des erfindungsgemäß vorgeschlagenen Ankerritzels und dessen Lagerung an einem Wellenzapfen,
- Figur 4: die Komponenten der reibschlüssigen Verbindung,
- Figur 5: die reibschlüssige Verbindung ausgebildet als Rutschkupplung in vergrößertem Maßstab,
- Figur 6: ein Detail der Lamellenverzahnung und an dieser drehfest gelagerten Scheibe,
- Figur 7: eine perspektivische Draufsicht auf das durch das Befestigungselement axial gesicherte Ankerritzel und
- Figur 8: eine Schnittdarstellung durch die perspektivische Darstellung gemäß Figur 7.

### Ausführungsformen der Erfindung

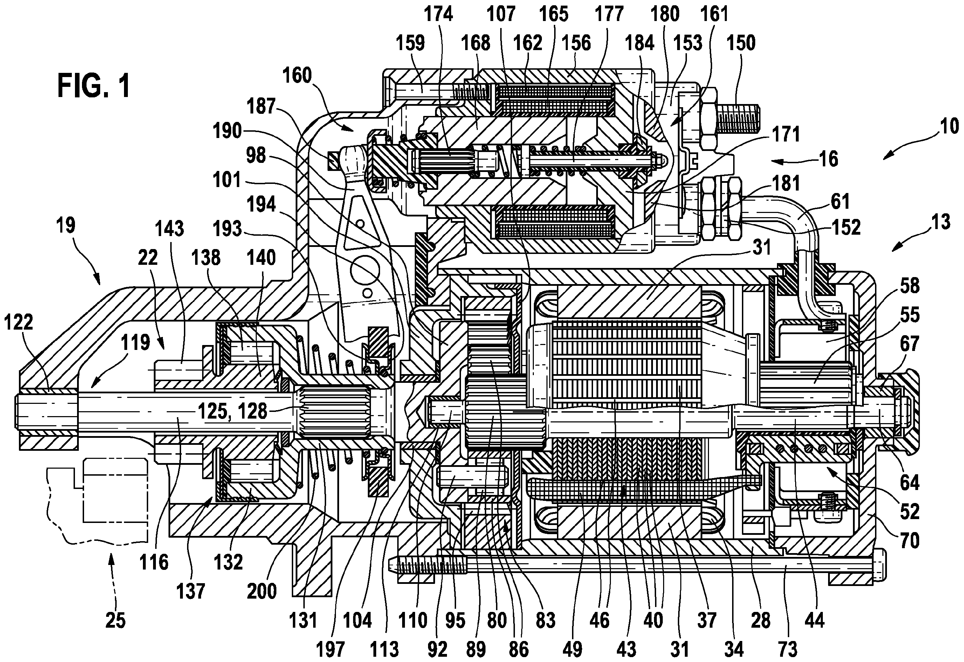

Figur 1 zeigt einen Längsschnitt durch eine Startvorrichtung.

Die Startvorrichtung 10 weist beispielsweise einen Startermotor 13 und einen Vorspuraktuator 16, der z. B. ein Relais oder ein Starterrelais ist, auf. Der Startermotor 13 und der elektrische Vorspuraktuator 16 sind an einem gemeinsamen Antriebslagerschild 19 befestigt. Der Startermotor 13 dient funktionell dazu, ein Andrehritzel 22 anzutreiben, wenn es in einen Zahnkranz 25 einer in Figur 1 nicht dargestellten Verbrennungskraftmaschine eingespurt ist.

Der Startermotor 13 weist als Gehäuse ein Polrohr 28 auf, das an seinem Innenumfang Polschuhe 31 trägt, die jeweils von einer Erregerwicklung 34 umwickelt sind. Die Polschuhe 31 umgeben wiederum einen Anker 37, der ein aus Lamellen 40 aufgebautes Ankerpaket 43 und eine in Nuten 46 angeordnete Ankerwicklung 49 aufweist. Das Ankerpaket 43 ist auf eine Antriebswelle 44 aufgepresst. An den dem Andrehritzel 22 abgewandten Ende der Antriebswelle 44 ist des Weiteren ein Kommutator 52 angebracht, der u.a. aus einzelnen Kommutatorlamellen 55 aufgebaut ist. Die einzelnen Kommutatorlamellen 55 sind in bekannter Weise mit der Ankerwicklung 49 derart elektrisch verbunden, dass sich bei Bestromung der Kommutatorlamellen 55 durch Kohlebürsten 58 eine Drehbewegung des Ankers 37 im Polrohr 28 einstellt. Eine zwischen dem Vorspuraktuator 16 und dem Startermotor 13 angeordnete Stromzufuhr 61 versorgt im Einschaltzustand sowohl die Kohlebürsten 58, als auch die Erregerwicklung 34 mit Strom. Die Antriebswelle 44 ist kommutatorseitig mit einem Wellenzapfen 64 in einem Gleitlager 67 abgestützt, welches wiederum in einem Kommutatorlagerdeckel 70 ortsfest gehalten ist. Der Kommutatorlagerdeckel 70 wiederum wird mittels Zugankern 73, die über den Umfang des Polrohrs 28 verteilt angeordnet sind (Schrauben, beispielsweise 2, 3 oder 4 Stück) im Antriebslagerschild 19 befestigt. Es stützt sich dabei das Polrohr 28 am Antriebslagerschild 19 ab und der Kommutatorlagerdeckel 70 am Polrohr 28.

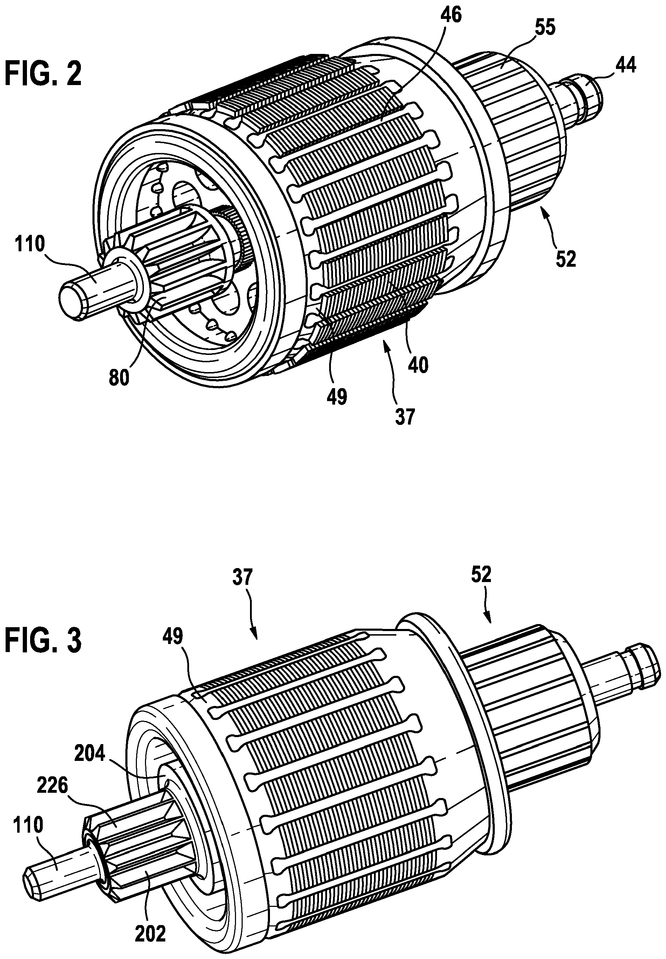

In Antriebsrichtung gesehen schließt sich an den Anker 37 ein Sonnenrad 80 an, das Teil eines Planetengetriebes 83 ist. Das Sonnenrad 80 stellt das Ankerritzel 202 gemäß Figur 3 dar. Das Sonnenrad 80 ist von mehreren Planetenrädern 86 umgeben, üblicherweise handelt es sich dabei um drei Planetenräder 86, die mittels Wälzlagern 89 auf Achszapfen 92 abgestützt sind. Die Planetenräder 86 wälzen in einem Hohlrad 95 ab, das im Polrohr 28 außenseitig gelagert ist. In Richtung zur Abtriebseite hin schließt sich an die Planetenräder 86 ein Planetenträger 98 an, in dem Achszapfen 92 aufgenommen sind. Der Planetenträger 98 wird wiederum in einem Zwischenlager 101 und einem daran angeordneten Gleitlager 104 gelagert. Das Zwischenlager 101 ist derartig topfförmig gestaltet, dass in diesem sowohl der Planetenträger 98, als auch die Planetenräder 86 aufgenommen sind. Des Weiteren ist im topfförmigen Zwischenlager 101 das Hohlrad 95 angeordnet, das letztlich durch einen Deckel 107 gegenüber dem Anker 37 geschlossen ist. Auch das Zwischenlager 101 stützt sich mit seinem Außenumfang an der Innenseite des Polrohrs 28 ab. Der Anker 37 weist auf dem vom Kommutator 52 abgewandten Ende der Antriebswelle 55 einen weiteren Wellenzapfen 110 auf, der ebenfalls innerhalb eines Gleitlagers 113 aufgenommen ist. Das Gleitlager 113 wiederum ist in einer zentralen Bohrung des Planetenträgers 98 aufgenommen. Der Planetenträger 98 ist einstückig mit der Abtriebswelle 116 verbunden. Diese Abtriebswelle ist mit ihrem vom Zwischenlager 101 abgewandtem Ende 119 in einem weiteren Lager 122, welches im Antriebslagerschild 19 befestigt ist, abgestützt.

Die Abtriebswelle 116 ist in verschiedene Abschnitte aufgeteilt: So folgt dem Abschnitt, der im Gleitlager 104 des Zwischenlagers 101 angeordnet ist, ein Abschnitt mit einer Geradverzahnung 125 (Außenverzahnung), die Teil einer Welle-Nabe-Verbindung 128 ist. Die Welle-Nabe-Verbindung 128 ermöglicht in diesem Fall das axial geradlinige Gleiten eines Mitnehmers 131. Alternativ besteht auch die Möglichkeit, zur Realisierung einer axialen Schraubbewegung eine Steilgewindeverzahnung einzusetzen. Der Mitnehmer 131 ist ein hülsenartiger Fortsatz, der einstückig mit einem topfförmigen Außenring 132 eines Freilaufes 137 verbunden ist. Der Freilauf 137 (Richtgesperre) umfasst des Weiteren einen Innenring 140, der radial innerhalb eines Außenringes 132 angeordnet ist. Zwischen dem Innenring 140 und dem Außenring 132 sind Klemmkörper 138 angeordnet. Die Klemmkörper 138 verhindern in Zusammenwirkung mit dem Innenring 140 und dem Außenring 132 eine Relativbewegung zwischen dem Außenring 132 und dem Innenring 140 in eine zweite Richtung. Mit anderen Worten: Der Freilauf 137 ermöglicht eine umlaufende Relativbewegung zwischen dem Innenring 140 und dem Außenring 132 nur in eine Richtung. Im vorliegenden Ausführungsbeispiel gemäß Figur 1 ist der Innenring 140 einstückig mit dem Andrehritzel 22 und dessen Schrägverzahnung 143, bei der es sich um eine Außenschrägverzahnung handelt, ausgeführt. Das Andrehritzel 22 kann alternativ auch als geradverzahnendes Ritzel ausgeführt sein. Statt elektromagnetisch erregter Polschuhe 31 mit Erregerwicklung 34 könnten auch permanent magnetisch erregte Pole eingesetzt werden.

Der elektrische Vorspuraktuator 16 bzw. ein linear beweglicher Anker 168 haben darüber hinaus auch die Aufgabe, mittels eines Zugelementes 187 einen im Antriebslagerschild 19 drehbeweglich angeordneten Hebel 190 zu bewegen. Der Hebel 190, üblicherweise als Gabelhebel ausgeführt, umgreift mit zwei hier nicht dargestellten "Zinken" zwei Scheiben 193, 194 an ihrem Außenumfang, um einen zwischen diesen eingeklemmten Mitnehmerring 197 zum Freilauf 137 hin gegen den Widerstand der Feder 200 zu bewegen und dadurch das Andrehritzel 22 in den Zahnkranz 25 der in Figur 1 nicht dargestellten Verbrennungskraftmaschine einzuspuren.

Nachfolgend wird auf den Einspurmechanismus eingegangen. Der elektrische Vorspuraktuaror 16 weist einen Bolzen 150 auf, der einen elektrischen Kontakt darstellt, der im Falle des Eingebautseins im Fahrzeug an den Pluspol einer elektrischen Starterbatterie, die hier nicht dargestellt ist, angeschlossen ist. Der Bolzen 150 ist durch einen Deckel 153 durchgeführt. Ein zweiter Bolzen 152 ist ein Anschluss für den elektrischen Startermotor 13, der über die Stromzufuhr 61 (dicke Litze) versorgt wird. Der Deckel 153 schließt ein Gehäuse 156 aus Stahl ab, welches mittels mehrerer Befestigungselemente 159, bei denen es sich beispielsweise um Schrauben handeln kann, am Antriebslagerschild 19 befestigt ist. In dem elektrischen Vorspuraktuator 16 ist eine Schubeinrichtung 160 zur Ausübung einer Zugkraft auf den Hebel 190, insbesondere ausgestaltet als Gabelhebel, und eine Schalteinrichtung 161 angeordnet. Die Schubeinrichtung 160 hat eine Wicklung 162 und die Schalteinrichtung 161 eine Wicklung 165. Die Wicklung 162 der Schubeinrichtung 160 und die Wicklung 165 der Schalteinrichtung 161 bewirken jeweils im eingeschalteten Zustand ein elektromagnetisches Feld, welches verschiedene Bauteile durchströmt. Die Welle-Nabe-Verbindung 128 kann statt mit einer Geradverzahnung 125 auch mit einer Steilgewindeverzahnung ausgestattet sein. Es sind dabei die Kombinationen möglich, wonach a) das Andrehritzel 22 schrägverzahnt ist und die Welle-Nabe-Verbindung 128 eine Geradverzahnung 125 aufweist, b) das Andrehritzel 22 schrägverzahnt ist und die Welle-Nabe--Verbindung 128 eine Steilgewindeverzahnung aufweist oder c) das Andrehritzel 22 geradverzahnt ist und die Welle-Nabe-- Verbindung 128 eine Steilgewindeverzahnung umfasst.

Der Darstellung gemäß Figur 2 ist eine perspektivische Ansicht des Ankers der Startvorrichtung gemäß der darstellenden Figur 1 zu entnehmen.

Aus der perspektivischen Darstellung gemäß Figur 2 geht hervor, dass der Anker 37 einen Wellenzapfen 110 umfasst, auf dem das Sonnenrad 80 des in Figur 1 dargestellten Umlaufgetriebes 83 in starrer Ausbildung angeordnet ist. Der Anker 37 umfasst eine Anzahl von Wicklungselementen, die jeweils durch Nuten 46 voneinander getrennt sind. Die Summe der Wicklungselemente ergibt die Ankerwicklung 49. An dem dem Sonnenrad 80 abgewandten Ende der Antriebswelle 44, von der in Figur 2 lediglich der Wellenzapfen 110 dargestellt ist, befindet sich ein Kommutator 52, der eine Anzahl von Kommutatorlamellen 55 umfasst.

Figur 3 zeigt eine perspektivische Darstellung des Ankers mit der erfindungsgemäß vorgeschlagenen Lösung.

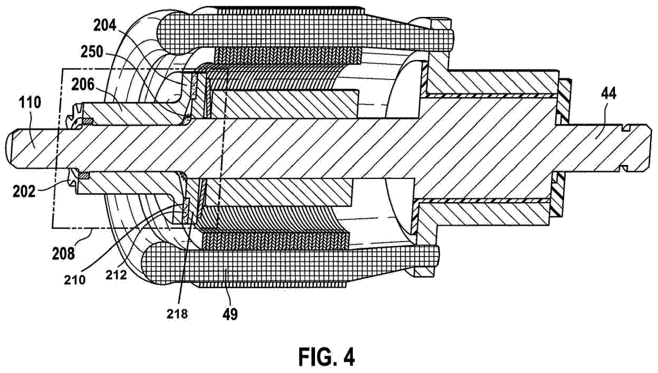

Figur 3 zeigt, dass auf dem Wellenzapfen 110 bzw. einem in leicht vergrößertem Durchmesser ausgeführten Bund desselben ein Ankerritzel 202 ausgeführt ist. Das Ankerritzel 202 gemäß der darstellenden Figur 3 umfasst neben einem Hülsenteil 206, vergleiche Figur 4, an dem eine Verzahnung 226 - hier ausgebildet als Geradverzahnung - ausgeführt ist, einen Bundteil 204. Der Bundteil 204 und das Hülsenteil 206 sind einstückig ausgeführt und bilden das Ankerritzel 202, welches das Sonnenrad 80 des Umlaufgetriebes 83 darstellt.

Der perspektivischen Darstellung gemäß Figur 3 ist zu entnehmen, dass der Anker 37 eine Ankerwicklung 49 sowie einen Kommutator 52 umfasst.

In Figur 4 sind die Komponenten einer reibschlüssigen Verbindung, welche eine Rutschkupplung darstellt, dargestellt.

Bei der Darstellung gemäß Figur 4 handelt es sich um eine perspektivische Schnittdarstellung des in Figur 3 dargestellten Rotors, d. h. des Ankers 37 des Startermotors 13.

Wie Figur 4 zu entnehmen ist, umfasst eine Rutschkupplung 208 die Komponenten Ankerritzel 202, umfassend Bundteil 204 und Hülsenteil 206, einen an den Bundteil 204 angestellten Reibbelag 212, sowie eine Scheibe 218, geführt mittels einer Lamellenverzahnung 250, die durch mindestens ein Federelement beaufschlagt ist.

Der Vollständigkeit halber sei erwähnt, dass in Figur 4 die Ankerwicklung mit Bezugszeichen 49 bezeichnet ist und die sich durch den Anker 37 erstreckende Antriebswelle mit 44 bezeichnet ist, auf deren Wellenzapfen 110 bzw. auf einer Verdickung desselben das Ankerritzel 202 mit seinem Hülsenteil 206 aufgenommen ist.

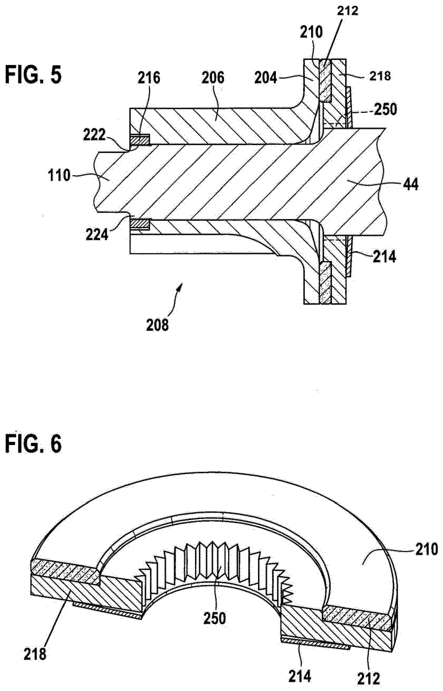

Figur 5 zeigt die Aufnahme des Ankerritzels auf dem Wellenzapfen der Antriebswelle, d. h. der Ankerwelle in vergrößertem Maßstab.

Wie der Darstellung gemäß Figur 5 entnommen werden kann, ist am Wellenzapfen 110 der Antriebswelle 44 (vgl. Darstellung gemäß Figur 4) ein Bund 224 ausgebildet, der im Vergleich zum Wellenzapfen 110 einen vergrößerten Durchmesser aufweist und an dem zumindest auf einem Teilbereich seiner Mantelfläche, ein Gewindeabschnitt 222 ausgebildet ist. Wie die Darstellung gemäß Figur 5 des Weiteren zeigt, ist das Ankerritzel 202 auf den mit größeren Durchmesser ausgeführten Bund 224 am Wellenzapfen 110 aufgeschoben. Eine axiale Sicherung des Ankerritzels 202 erfolgt durch beispielsweise ein als Feingewindemutter ausgebildetes Befestigungselement 216, welches auf den Gewindeabschnitt 222 an der Mantelfläche des Bundes 224 in vergrößertem Durchmesser aufgeschraubt wird. Dadurch ist das Ankerritzel 202 am Bund 224 des Wellenzapfens 110 der Antriebswelle 44 in axiale Richtung gesichert, d. h. fix positioniert.

Wie aus der Darstellung gemäß Figur 5 des Weiteren hervorgeht, befindet sich an der Antriebswelle 44 des Ankers 37 eine Lamellenverzahnung 250. Die Lamellenverzahnung 250 ist fest mit der Antriebswelle 44 verbunden oder Teil von dieser. An der Lamellenverzahnung 250 ist die Scheibe 218 drehfest gelagert, jedoch in axiale Richtung verschiebbar, welche an einer Seite - insbesondere der dem Hülsenteil 206 des Ankerritzels 202 zuweisenden Seite - einen Reibbelag 212 mit einer Reibbeschichtung 210 aufweist. Die Scheibe 218 wird mittels eines eine Axialkraft erzeugenden Federelementes 214, insbesondere ausgestaltet als Tellerfeder, oder als Tellerfederpaket oder Wellenfeder in axiale Richtung beaufschlagt, so dass die drehfest in der Lamellenverzahnung 250 gelagerte Scheibe 218, die axial verschiebbar ist, mit dem Reibbelag 212, bzw. der Reibbeschichtung 210, an den Bundteil 204 des Ankerritzels 202 gepresst wird.

Im montierten Zustand erzeugt das mindestens eine Federelement 214 eine Axialkraft, die über die Scheibe 218 auf mindestens einen Reibbelag 212 bzw. mindestens eine Reibbeschichtung 210, auf das durch das Befestigungselement 216 axial gesicherte Ankerritzel 202 übertragen wird. Hierdurch ist unter Berücksichtigung des Reibkoeffizienten des Reibbelags 212 bzw. der Reibbeschichtung 210, ein definiertes Drehmoment erforderlich, um das Ankerritzel 202 auf dem Bund 224 des Wellenzapfens 110 der Antriebswelle 44 verdrehen zu können. Dieses definierte Drehmoment sorgt schlussendlich dafür, dass sich bei Auftreten eines Überlastfalles, d. h. einer Überschreitung eben jenes wohldefinierten Drehmoments das Ankerritzel 202 auf der Antriebswelle 44 verdrehen kann und somit die Starterbauteile vor Überlastung geschützt werden können.

Figur 6 zeigt ein Detail der Anordnung der Scheibe 218 in der Lamellenverzahnung 250 in vergrößertem Maßstab.

Die Lamellenverzahnung 250 führt die Scheibe 218 axial beweglich, jedoch drehfest.

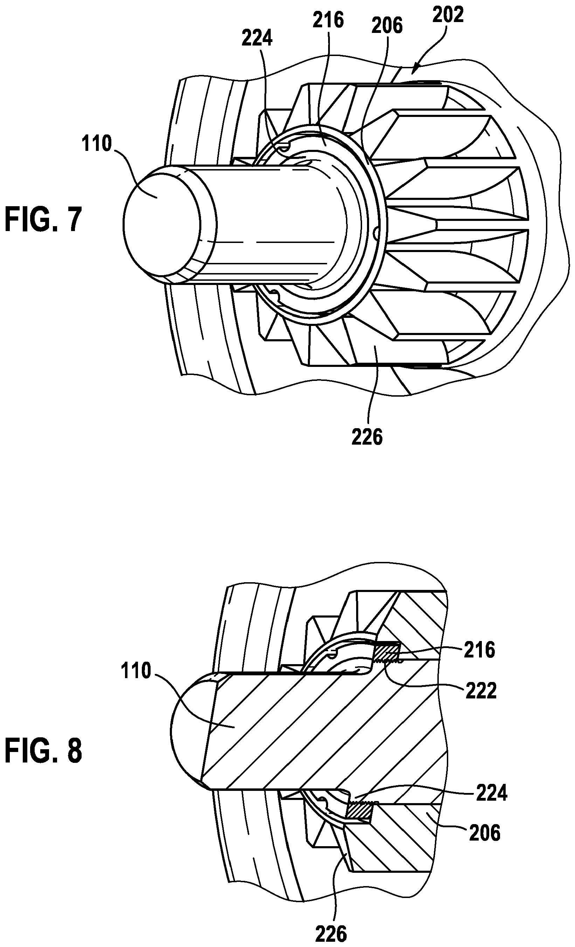

In Figuren 7 und 8 sind Details der Axialsicherung des Ankerritzels auf dem Bund des Wellenzapfens zu entnehmen.

So zeigt Figur 7, dass der Wellenzapfen 110 den Bund 224 aufweist, der im Vergleich zum Durchmesser des Wellenzapfens 110 mit vergrößertem Durchmesser ausgebildet ist. Am Bund 224 befindet sich das Feingewinde 222, vergleiche Darstellung gemäß Figur 5, auf welches das als Mutter ausgebildete Befestigungselement 216 aufgeschraubt wird. Zur Erleichterung der Montage und zum Herstellen der axialen Sicherung weist das Befestigungselement 216 an seinem Umfang eine Anzahl von Vertiefungen auf, in die ein Schraubwerkzeug im Rahmen eines automatisierten Schraubprozesses eingreift und das erforderliche Anzugsdrehmoment auf das Befestigungselement 216 überträgt.

Mittels des Befestigungselements 216 ist der Hülsenteil 206, auf dessen Außenumfang sich die hier als Geradverzahnung ausgebildete Verzahnung 226 befindet, in axiale Richtung gesichert.

Figur 8 zeigt eine Schnittdarstellung durch die Anordnung gemäß Figur 7.

Aus Figur 8 geht hervor, dass in dem Bereich, in dem das Befestigungselement 216, insbesondere ausgebildet als Mutter, montiert wird, ein Gewindeabschnitt 222 in der Mantelfläche des Bundes 224 ausgeführt ist. Das Befestigungselement 216 wird derart montiert, dass die Stirnseite des Befestigungselements 216 mit der Stirnseite der Verzahnung 226 am Hülsenteil 206 des Ankerritzels 202 fluchtet. In den Ausführungsvarianten gemäß der Figuren 7 und 8 ist die Verzahnung 226 des Ankerritzels 202 als Geradverzahnung ausgeführt. Alternativ dazu ließen sich auch andere Verzahnungsgeometrien, so z. B. Steilgewindeverzahnung oder Schrägverzahnung vorstellen.

## Patentansprüche

1. Startvorrichtung (10) zum Andrehen von Verbrennungskraftmaschinen, mit einem Rotor (37), der eine Antriebswelle (44) aufweist, an der ein Ankerritzel (80, 202) aufgenommen ist, wobei das Ankerritzel (80, 202) mittels einer reibschlüssigen Verbindung (208) auf einem Wellenzapfen (110, 224) der Antriebswelle (44) aufgenommen ist, und das Ankerritzel (202) einen Hülsenteil (206) und ein Bundteil (204) aufweist, wobei an der Antriebswelle (44) mindestens ein federnd ausgebildetes Federelement (214) aufgenommen ist, welches eine Axialkraft erzeugt, die über eine Reibpaarung (206; 210, 212) auf das Ankerritzel (202) wirkt, wobei das Ankerritzel (202) mit einem Befestigungselement (216) axial auf dem Wellenzapfen (110, 224) gesichert ist, **dadurch gekennzeichnet, dass** das Befestigungselement (216) als Mutter ausgeführt ist.

2. Startvorrichtung (10) gemäß Anspruch 1, **dadurch gekennzeichnet, dass** die reibschlüssige Verbindung (208) als Rutschkupplung ausgeführt ist.

3. Startvorrichtung (10) gemäß Anspruch 2, **dadurch gekennzeichnet, dass** die Rutschkupplung (208) die Bauteile Ankerritzel (202), Federelement (214) und Befestigungselement (216) umfasst, wobei die Rutschkupplung (208) ferner einen Reibbelag (212) und eine Scheibe (218) umfasst.

4. Startvorrichtung (10) gemäß Anspruch 1 oder 2, **dadurch gekennzeichnet, dass** die Reibpaarung den Hülsenteil (206) des Ankerritzels (202) und eine mit Axialkraft beaufschlagte Scheibe (218) mit mindestens einem Reibbelag (212) umfasst.

5. Startvorrichtung (10) gemäß einem der Ansprüche 3 oder 4, **dadurch gekennzeichnet, dass** die Scheibe (218) drehfest mit einer Lamellenverzahnung (250) des Ankers (37) verbunden ist.

6. Startvorrichtung (10) gemäß einem der vorstehenden Ansprüche, **dadurch gekennzeichnet, dass** das Ankerritzel (202) ein Sonnenrad (80) eines Umlaufgetriebes (83), insbesondere eines Planetengetriebes darstellt.

7. Startvorrichtung (10) gemäß einem der vorstehenden Ansprüche, **dadurch gekennzeichnet, dass** das mindestens eine Federelement (214) als Tellerfeder, als Tellerfedernpaket oder als Wellenfeder ausgeführt ist.

## Claims

1. Starter device (10) for starting internal combustion engines, comprising a rotor (37) which comprises a drive shaft (44) on which an armature pinion (80, 202) is arranged, wherein the armature pinion (80, 202) is arranged on a shaft journal (110, 224) of the drive shaft (44) by means of a frictional connection (208), and the armature pinion (202) comprises a sleeve part (206) and a flange part (204), wherein at least one resiliently formed spring element (214) is arranged on the drive shaft (44) which generates an axial force which acts via a friction pairing (206, 210, 212) on the armature pinion (202), wherein the armature pinion (202) is secured axially on the shaft journal (110, 224) by means of a fastening element (216), **characterized in that** the fastening element (216) is configured as a nut.

2. Starter device (10) according to claim 1, **characterized in that** the frictional connection (208) is configured as a sliding clutch.

3. Starter device (10) according to claim 2, **characterized in that** the sliding clutch (208) comprises the components armature pinion (202), spring element (214) and fastening element (216), wherein the sliding clutch (208) further comprises a friction lining (212) and a disc (218).

4. Starter device (10) according to claim 1 or 2, **characterized in that** the friction pairing comprises the sleeve part (206) of the armature pinion (202) and a disc (218) subjected to an axial force comprising at least one friction lining (212).

5. Starter device (10) according to any one of claims 3 or 4, **characterized in that** the disc (218) is connected in a rotationally fixed manner to a lamellar toothing (250) of the armature (37).

6. Starter device (10) according to any one of the preceding claims, **characterized in that** the armature pinion (202) is a sun gear (80) of an epicyclic gear (83), in particular a planetary gear.

7. Starter device (10) according to any one of the preceding claims, **characterized in that** the at least one spring element (214) is configured as a disc spring, a disc spring package or a wave spring.

## Revendications

1. Dispositif de démarrage (10) pour le démarrage de moteurs à combustion interne, ayant un rotor (37) comportant un arbre d'entraînement (44) sur lequel est reçu un pignon d'induit (80, 202), dans lequel le pignon d'induit (80, 202) est reçu sur un tourillon d'arbre (110, 224) de l'arbre d'entraînement (44) au moyen un assemblage par friction (208), et le pignon d'induit (202) comporte une partie de douille (206) et une partie d'embase (204), dans lequel au moins un élément à ressort (214) réalisé de manière à faire ressort est reçu sur l'arbre d'entraînement (44), lequel élément à ressort génère une force axiale qui agit sur le pignon d'induit (202) par un couple de friction (206 ; 210, 212), dans lequel le pignon d'induit (202) est bloqué axialement sur le tourillon d'arbre (110, 224) par un élément de fixation (216), **caractérisé en ce que** l'élément de fixation (216) est réalisé sous la forme d'un écrou.

2. Dispositif de démarrage (10) selon la revendication 1, **caractérisé en ce que** l'assemblage par friction (208) est réalisé sous la forme d'un accouplement à friction.

3. Dispositif de démarrage (10) selon la revendication 2, **caractérisé en ce que** l'accouplement à friction (208) comprend, en tant que composants, le pignon d'induit (202), l'élément à ressort (214) et l'élément de fixation (216), dans lequel l'accouplement à friction (208) comprend en outre une garniture de friction (212) et un disque (218).

4. Dispositif de démarrage (10) selon la revendication 1 ou 2, **caractérisé en ce que** le couple de friction (206) inclut la partie de douille (206) du pignon d'induit (202) et un disque (218) soumis à une force axiale avec au moins une garniture de friction (212).

5. Dispositif de démarrage (10) selon l'une des revendications 3 ou 4, **caractérisé en ce que** le disque (208) est assemblé de manière non rotative avec une denture de lamelles (250) de l'induit (37).

6. Dispositif de démarrage (10) selon l'une des revendications précédentes, **caractérisé en ce que** le pignon d'induit (202) représente une roue solaire (80) d'un engrenage épicycloïdal (83), en particulier d'un engrenage planétaire.

7. Dispositif de démarrage (10) selon l'une des revendications précédentes, **caractérisé en ce que** le au moins un élément à ressort (214) est réalisé sous la forme d'une rondelle-ressort, d'un jeu de rondelles-ressorts ou d'un ressort ondulé.
